# EUROPEAN PATENT SPECIFICATION

(11) **EP 0 754 527 B1**
(45) Date of publication and mention of the grant of the patent: **17.10.2001**
(21) Application number: 95304999.6
(22) Date of filing: 18.07.1995
(51) Int. Cl.: B25B 21/00

(54) **Fluid operated tool for elongating and relaxing a threaded connector**
Druckmittel betätigtes Werkzeug zur Änderung der Länge einer Schraubverbindung
Outil actionné par fluide pour allonger ou comprimer un raccord fileté

(43) Date of publication of application: 22.01.1997
(60) Divisional application: 01106856.6
(73) Proprietor: Junkers, John K., Saddle River, New Jersey 07458 (US)
(72) Inventor: Junkers, John K., Saddle River, New Jersey 07458 (US)
(74) Representative: Newby, Martin John

(56) References cited:
- EP-A- 0 216 959
- WO-A-93/22568
- US-A- 2 086 261
- US-A- 3 615 240
- US-A- 4 196 896
- US-A- 4 867 621

## Description

This invention relate to fluid operated tools, particularly for elongating and relaxing of threaded connectors, according to the preamble of claim 1 (see for example WO-A-93/22568).

There are many different known fluid operated wrenches. Some fluid operated wrenches include a hydraulic drive, a driving part which engages a threaded connector and is driven by the drive so that, by actuating the drive, the driving part turns the threaded connector, and a reaction part adapted to counteract a force created during turning of the threaded connector. The reason for the provision of the reaction part is that, during turning of the threaded connector, a force is created tending to turn the tool in the opposite direction. It is necessary to counteract this force, which has been achieved in existing tools by the corresponding reaction part. In known fluid operated tools, such as for example the fluid operated tools disclosed in my US patent specifications US-A-4,201,099, US-A-4,336,727, US-A-4,368,655 and others, the reaction part is formed as an abutment element which is provided on the housing and adapted to abut against a stationary object located near the threaded connector to be tightened or loosened. While such a reaction part provides an efficient counteraction to the force tending to turn the tool in the opposite direction, it has some disadvantages. On the one hand it is always necessary to have a neighbouring object for the reaction part to abut against. On the other hand, the abutment against a neighbouring object has always been performed in these constructions in such a way that some of the parts which transmit the movement of the hydraulic drive to the driving part and also some of the parts in the driving part are subjected to forces which can break these parts. It is therefore clear that further modifications and improvements of such fluid operated tools are desirable.

Accordingly, it is an object of the present invention to provide a fluid operated tool according to the characterising part of claim 1, which avoids the disadvantages of the prior art.

In keeping with these objects and with others which will become apparent hereinafter, one feature of the present invention resides in a fluid operated tool as claimed in the ensuing claim 1.

When the fluid operated tool is designed in accordance with the present invention it eliminates the disadvantages of the prior art and provides for the above mentioned highly advantageous results.

The invention itself, both as to its construction and its method of operation, together with additional objects and advantages thereof, will be best understood from the following description of specific embodiments when read in connection with the accompanying drawings, in which:
Figure 1 is a side view of one embodiment of a fluid operated tool in accordance with the present invention; and
Figure 2 is a plan of the fluid operated tool of Figure 1.

A fluid operated tool in accordance with the present invention is used for elongating and relaxing a threaded connector, such as for example a threaded stud 1. The fluid operated tool has a housing 2 which accommodates fluid operated drive means which conventionally includes a cylinder 4, a piston 5 reciprocatable in the cylinder under the action of a working fluid medium, a piston rod 6 extending outwardly beyond the cylinder 4 and pivotally connected with at least one driving plate 7 for turning the latter.

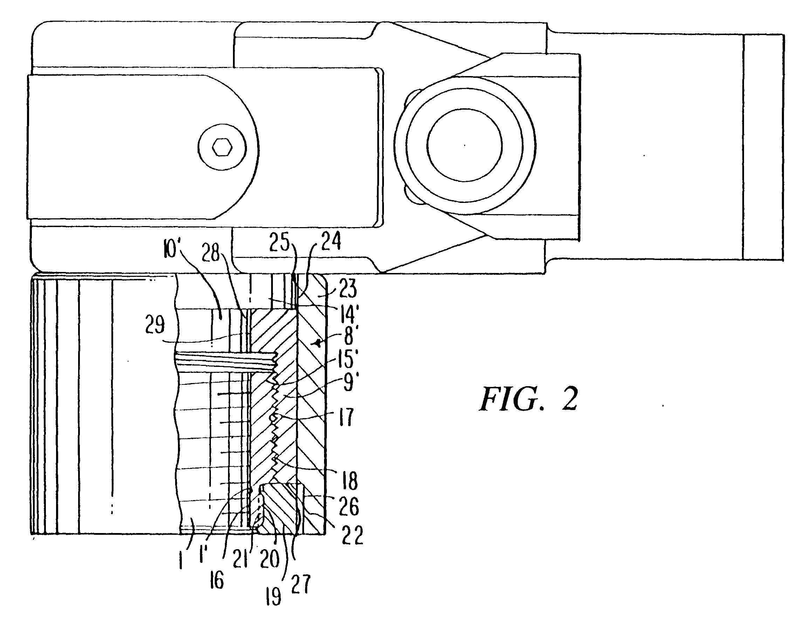

The fluid operated tool has in addition to an inner sleeve 15', a socket 23 provided with inner splines 24 which engage with outer splines 25 of a non-rotatable projection 14' which is non-rotatably mounted on the housing 2 of the tool. The lower part (in Figure 2) of the socket 23 has inner splines 26 which engage with outer splines 27 of an intermediate element 19. The inner sleeve 15' does not have an upper part engageable with another part of the tool. When the reaction part is designed as shown, the inner sleeve 15' cannot rotate since it is non-rotatably engaged with the intermediate element 19 through splines 20, 21. The intermediate element 19 is further non-rotatably engaged, through splines 26, 27, with the socket 23, and the socket 23 is non-rotatably engaged through splines 24, 25 with the non-rotatable projection 14' of the tool.

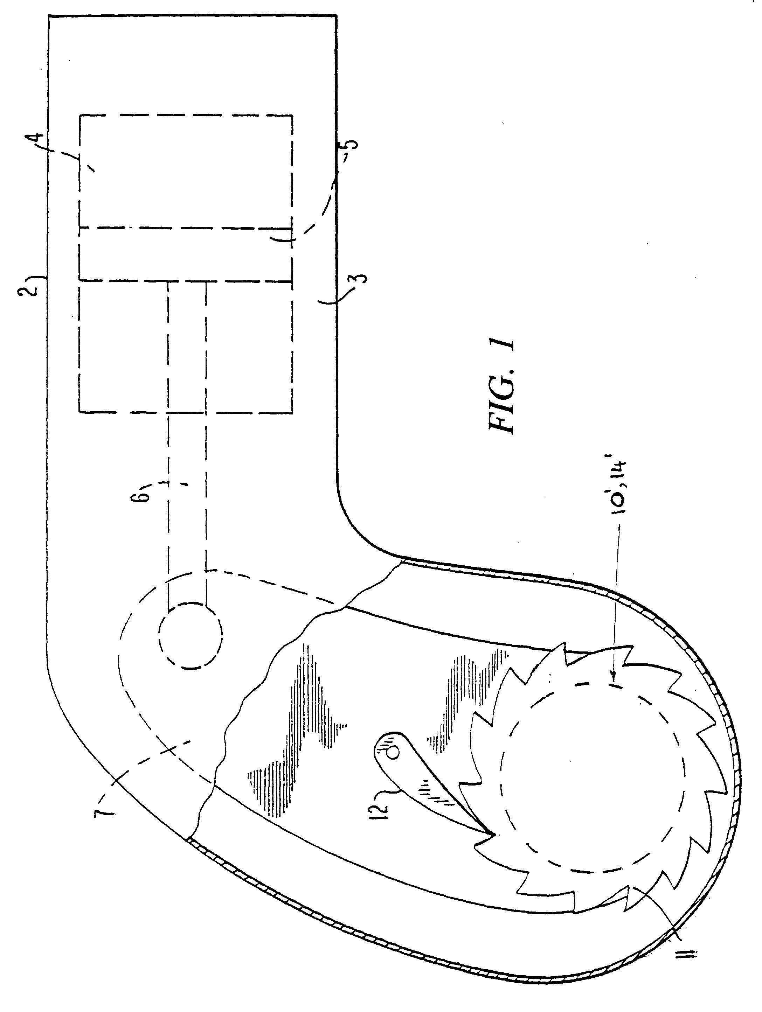

The driving part of the tool includes a rotatable tool element 8' formed as an outer sleeve 9'. The outer sleeve 9' has inner splines 28 which engage with outer splines 29 of a coaxial projection 10' of the ratchet wheel 11 which in turn is intermittently turnable by the pawl 12 mounted on the driving plate 7. The projections 10' and 14' are shown schematically in dashed lines in Figure 1.

During the operation of the fluid-operated tool, the inner sleeve 15' engages with the stud 1 but cannot turn since it is connected with the non-rotatable intermediate element 19 which in turn is connected with the non-rotatable socket 23. Rotation of the stud 1 is thus prevented. Under the action of the fluid operated drive, the pawl 12 turns the ratchet 11 which in turn, through its projection 10', turns the outer sleeve 9'. The outer sleeve 9', with its lower end surface abutting against the end surface 22 of the intermediate element 19, freely turns relative to the latter. The inner sleeve 15' does not rotate but is displaced axially in response to the rotation of the outer sleeve 9' causing axial displacement of the stud 1 for elongating or relaxing the stud 1, depending on the direction of action of the fluid operated drive.

## Claims

1. A fluid operated tool for elongating and relaxing a threaded connector, comprising a non-rotatable tool element (15') provided with first engaging means (16) for non-rotatably engaging a threaded connector (1); a rotatable tool element (9') coaxial with the non-rotatable tool element (15'), rotatable about an axis of the threaded connector (1) and having second engaging means (17) for engaging said non-rotatable tool element (15'); and an intermediate element (19) arranged and formed so that it engages with, but is non-rotatable relative to, said non-rotatable tool element (15'); the rotatable tool element (9') being freely turnable relative to the intermediate element (19) whereby, when said rotatable tool element (9') is turned about said axis, the non-rotatable tool element (15') only moves in an axial direction, but does not turn, and therefore is able to displace in the axial direction a threaded connector (1) when it is engaged with the latter; **characterised in that** the tool further comprises a housing (2); a fluid drive (4-7); a rotatable projection (10') which is rotatable by said fluid drive (4-7) and which is connected with said rotatable tool element (9') to rotate the latter; a non-rotatable projection (14') which is not rotatable relative to said housing (2), and a socket (23) which is non-rotatably connected with said non-rotatable projection (14') and said intermediate element (19) so as to prevent rotation of said non-rotatable tool element (15'); and **in that** said rotatable and non-rotatable projections (10' and 14') and said rotatable and non-rotatable tool elements (9',15') and socket (23) are coaxial with each other.

2. A fluid operated tool according to claim 1, **characterised in that** said non-rotatable tool element (15') is formed as an inner sleeve (15') having an inner surface provided with said first engaging means (16) for engaging an outer surface (1') of the threaded connector (1) and an outer surface provided with a third engaging means (18), and **in that** said rotatable tool element (9') is formed as an outer sleeve (9') having an inner surface provided with said second engaging means (17) which engage the said third engaging means (18) of the non-volatable tool element (15').

3. A fluid operated tool according to claim 2, **characterised in that** said intermediate element (19) is formed as a ring having an end surface (22) and an inner surface provided with fourth engaging means (20) which engage said outer surface of said inner sleeve (15'), and **in that** said outer sleeve (9') has another end surface which is in contact with said end surface (22) of said intermediate element (19) during the free turning of said outer sleeve (9') relative to said intermediate element (19).

4. A fluid operated tool according to claim 2 or 3, **characterised in that** said inner sleeve (15') has more surfaces cooperating with other parts of the tool., whilst said outer sleeve (9') has less surfaces cooperating with other parts of the tool.

5. A fluid operated tool according to any one of the preceding claims, **characterised in that** said socket (23) is located radially outwardly of said rotatable and non-rotatable tool elements (9' and 15').

6. A fluid operated tool according to any one of the preceding claims, **characterised in that** said rotatable projection (10') is connected with said rotatable tool element (9') in a region axially adjacent a region in which said non-rotatable projection (14') is connected with said nonrotatable tool element (15') via said socket (23) and said intermediate element (19).

## Patentansprüche

1. Druckmittelbetätigtes Werkzeug zum Dehnen und Entspannen eines Gewindeverbinders, mit einem nichtdrehbaren Werkzeugelement (15'), das mit ersten Eingriffsmitteln (16) zum nichtdrehbaren Eingriff eines Gewindeverbinders (1) versehen ist; einem mit dem nichtdrehbaren Werkzeugelement (15') koaxialen drehbaren Werkzeugelement (9'), das um eine Achse des Gewindeverbinders (1) drehbar ist und zweite Eingriffsmittel (17) zum Eingriff des nichtdrehbaren Werkzeugelements aufweist; und einem Zwischenelement (19), das so angeordnet und ausgebildet ist, daß es das nichtdrehbare Werkzeugelement (15') in Eingriff nimmt, aber bezüglich diesem nicht drehbar ist; wobei das drehbare Werkzeugelement (9') bezüglich des Zwischenelements (19) frei drehbar ist, wodurch sich bei Drehung des drehbaren Werkzeugelements (9') um die Achse das nichtdrehbare Werkzeugelement (15') nur in einer axialen Richtung bewegt, sich aber nicht dreht, und deshalb einen Gewindeverbinder (1) in die axiale Richtung verschieben kann, wenn es mit letzterem in Eingriff steht; **dadurch gekennzeichnet, daß** das Werkzeug weiterhin folgendes umfaßt: ein Gehäuse (2); einen Fluidantrieb (4 - 7); einen drehbaren Vorsprung (10'), der durch den Fluidantrieb (4 - 7) gedreht werden kann und so mit dem drehbaren Werkzeugelement (9') verbunden ist, daß er letzteres drehen kann; einen nichtdrehbaren Vorsprung (14'), der bezüglich des Gehäuses (2) nicht drehbar ist, und eine Buchse (23), die mit dem nichtdrehbaren Vorsprung (14') und dem Zwischenelement (19) nicht drehbar verbunden ist, so daß eine Drehung des nichtdrehbaren Werkzeugelements (15') verhindert wird; und daß der drehbare und der nichtdrehbare Vorsprung (10' und 14') und das drehbare und das nichtdrehbare Werkzeugelement (9', 15') und die Buchse (23) koaxial miteinander sind.

2. Druckmittelbetätigtes Werkzeug nach Anspruch 1, **dadurch gekennzeichnet, daß** das nichtdrehbare Werkzeugelement (15') als eine innere Hülse (15') ausgebildet ist, die eine Innenfläche, die mit den ersten Eingriffsmitteln (16) zur Ineingriffnahme einer Außenfläche (1') des Gewindeverbinders (1) versehen ist, und eine Außenfläche, die mit dritten Eingriffsmittels (18) versehen ist, aufweist, und daß das drehbare Werkzeugelement (9') als eine äußere Hülse (9') ausgebildet ist, die eine Innenfläche aufweist, die mit den zweiten Eingriffsmitteln (17) versehen ist, die die dritten Eingriffsmittel (18) des nichtdrehbaren Werkzeugelements (15') in Eingriff nehmen.

3. Druckmittelbetätigtes Werkzeug nach Anspruch 2, **dadurch gekennzeichnet, daß** das Zwischenelement (19) als ein Ring mit einer Endfläche (22) und einer Innenfläche ausgebildet ist, die mit vierten Eingriffsmitteln (20) versehen ist, die die Außenfläche der inneren Hülse (15') in Eingriff nehmen, und daß die äußere Hülse (9') eine andere Endfläche aufweist, die mit der Endfläche (22) des Zwischenelements (19) während des freien Drehens der äußeren Hülse (9') bezüglich des Zwischenelements (19) in Berührung steht.

4. Druckmittelbetätigtes Werkzeug nach Anspruch 2 oder 3, **dadurch gekennzeichnet, daß** die innere Hülse (15') mehr Flächen aufweist, die mit anderen Teilen des Werkzeugs zusammenwirken, während die äußere Hülse (9') weniger Flächen aufweist, die mit anderen Teilen des Werkzeugs zusammenwirken.

5. Druckmittelbetätigtes Werkzeug nach einem der vorhergehenden Ansprüche, **dadurch gekennzeichnet, daß** die Buchse (23) radial außerhalb des drehbaren und nichtdrehbaren Werkzeugelements (9' und 15') angeordnet ist.

6. Druckmittelbetätigtes Werkzeug nach einem der vorhergehenden Ansprüche, **dadurch gekennzeichnet, daß** der drehbare Vorsprung (10') mit dem drehbaren Werkzeugelement (9') in einem Bereich verbunden ist, der axial neben einem Bereich liegt, in dem der nichtdrehbare Vorsprung (14') über die Buchse (23) und das Zwischenelement (19) mit dem nicht drehbaren Werkzeugelement (15') verbunden ist.

## Revendications

1. Outil à actionnement hydraulique, pour allonger et relaxer un connecteur fileté, comprenant un élément d'outil (15') non rotatif doté d'un premier moyen d'engagement (16) pour engager sans rotation un connecteur fileté (1) ; un élément d'outil rotatif (9') coaxial par rapport à l'élément d'outil non rotatif (15'), apte à tourner autour d'un axe du connecteur fileté (1) et présentant un deuxième moyen d'engagement (17) pour engager ledit élément d'outil non rotatif (15') ; et un élément intermédiaire (19) agencé et configuré de telle sorte qu'il s'engage au moins sur ledit élément d'outil non rotatif (15') sans pouvoir tourner par rapport à lui ; l'élément d'outil rotatif (9') pouvant tourner librement par rapport à l'élément intermédiaire (19) grâce à quoi, lorsque ledit élément d'outil rotatif (9') est tourné autour dudit axe, l'élément d'outil non rotatif (15') se déplace uniquement dans une direction axiale mais ne tourne pas, et est par conséquent apte à déplacer dans la direction axiale un connecteur fileté (1) lorsqu'il est engagé sur ce dernier ; **caractérisé en ce que** l'outil comprend en outre un boîtier (2) ; un entraînement hydraulique (4 - 7) ; une saillie rotative (10') qui peut être mise en rotation par ledit entraînement hydraulique (4 - 7) et qui est relié audit élément d'outil rotatif (9') pour faire tourner ce dernier ; une saillie non rotative (14') qui ne peut tourner par rapport audit boîtier (2) et une douille (23) qui est reliée sans rotation à ladite saillie non rotative (14') et audit élément intermédiaire (19) de manière à empêcher la rotation dudit élément d'outil non rotatif (15') ; et **en ce que** ladite saillie rotative, ladite saillie non rotative (10' et 14'), ledit élément d'outil rotatif, ledit élément d'outil non rotatif (9', 15') et la douille (23) sont coaxiaux les uns par rapport aux autres.

2. Outil à actionnement hydraulique selon la revendication 1, **caractérisé en ce que** ledit élément d'outil non rotatif (15') est configuré comme manchon intérieur (15') dont une surface intérieure est dotée dudit premier moyen d'engagement (16) pour engager une surface extérieure (1') du connecteur fileté (1) et une surface extérieure dotée d'un troisième moyen d'engagement (18), et **en ce que** ledit élément d'outil rotatif (9') est configuré comme manchon extérieur (9') dont une surface intérieure est dotée dudit deuxième moyen d'engagement (17) qui engage ledit troisième moyen d'engagement (18) dudit élément d'outil non rotatif (15').

3. Outil à actionnement hydraulique selon la revendication 2, **caractérisé en ce que** ledit élément intermédiaire (19) est configuré comme anneau présentant une surface d'extrémité (22) et une surface intérieure dotée de quatre moyens d'engagement (20) qui engagent ladite surface extérieure dudit manchon intérieur (15'), et **en ce que** ledit manchon extérieur (9') a une autre surface d'extrémité en contact avec ladite surface d'extrémité (22) dudit élément intermédiaire (19) pendant la rotation libre dudit manchon extérieur (9') par rapport audit élément intermédiaire (19).

4. Outil à actionnement hydraulique selon la revendication 2 ou 3, **caractérisé en ce que** ledit manchon intérieur (15') présente davantage de surfaces coopérant avec d'autres parties de l'outil, ledit manchon extérieur (9') présentant moins de surfaces coopérant avec d'autres parties de l'outil.

5. Outil à actionnement hydraulique selon l'une quelconque des revendications précédentes, **caractérisé en ce que** ladite douille (23) est située radialement à l'extérieur dudit élément d'outil rotatif et dudit élément d'outil non rotatif (9' et 15').

6. Outil à actionnement hydraulique selon l'une quelconque des revendications précédentes, **caractérisé en ce que** ladite saillie rotative (10') est reliée audit élément d'outil rotatif (9') dans une région adjacente dans le sens axial à une région dans laquelle ladite saillie non rotative (14') est reliée audit élément d'outil non rotatif (15') par l'intermédiaire de ladite douille (23) et dudit élément intermédiaire (19).
